# FASCICULE DE BREVET EUROPEEN

(11) **EP 2 699 792 B1**
(45) Date de publication et mention de la délivrance du brevet: **17.06.2015**
(21) Numéro de dépôt: 12714732.0
(22) Date de dépôt: 20.04.2012
(51) Int. Cl.: F03B 3/02, F03B 3/12

(54) **ROUE POUR MACHINE HYDRAULIQUE, MACHINE HYDRAULIQUE ÉQUIPÉE D'UNE TELLE ROUE ET INSTALLATION DE CONVERSION D'ÉNERGIE COMPRENANT UNE TELLE MACHINE HYDRAULIQUE**
LÄUFER FÜR EINE HYDRAULISCHE MASCHINE, HYDRAULISCHE MASCHINE MIT EINEM SOLCHEN LÄUFER UND ENERGIEUMWANDLUNGSANLAGE MIT EINER DERARTIGEN HYDRAULISCHEN MASCHINE
RUNNER FOR A HYDRAULIC MACHINE, HYDRAULIC MACHINE PROVIDED WITH SUCH A RUNNER, AND POWER-CONVERSION EQUIPMENT INCLUDING SUCH A HYDRAULIC MACHINE

(30) Priorité: 20.04.2011 FR 1153428
(43) Date de publication de la demande: 26.02.2014
(73) Titulaire: ALSTOM Renewable Technologies, 38100 Grenoble (FR)
(72) Inventeur: LAVIGNE, Sylvain, F-38320 Eybens (FR); HOUDELINE, Jean-Bernard, F-38850 Chirens (FR); BERAL, Claude, F-38113 Veurey-Voroize (FR)
(74) Mandataire: Alstom Technology Ltd
(86) Numéro de dépôt international: PCT/EP2012/057285
(87) Numéro de publication internationale: WO 2012/143518

(56) Documents cités:
- WO-A1-98/05863
- DE-A1- 10 210 426
- DE-C- 323 190
- JP-A- 2007 064 018
- US-A- 147 351
- US-A1- 2005 013 691

## Description

La présente invention concerne une roue de type Francis pour machine hydraulique destinée à être traversée par un écoulement forcé d'eau. Lorsque la machine est une turbine, un tel écoulement a pour effet d'entraîner la roue en rotation et lorsque la machine est une pompe, un tel écoulement résulte de cette rotation. Par ailleurs, la présente invention concerne une machine hydraulique équipée d'une telle roue. D'autre part, la présente invention se rapporte à une installation de conversion d'énergie comprenant une telle machine hydraulique.

De manière classique, une installation de conversion d'énergie hydraulique en énergie électrique comprend une machine hydraulique qui fonctionne en mode turbine et qui est traversée par un écoulement forcé d'eau dont le débit est contrôlé par un distributeur. La roue de la turbine entraine en rotation un arbre relié à un alternateur. Pour pouvoir coupler l'alternateur au réseau électrique, la vitesse de rotation de la turbine doit être stable, pour que la fréquence du signal électrique en sortie de l'alternateur soit égale à la fréquence du réseau électrique. La fréquence du réseau électrique est de 50 Hz en Europe, mais cette valeur peut être de 60 Hz dans d'autres territoires, par exemple aux Etats-Unis. Tant que la machine n'est pas couplée au réseau, le couple de la roue est nul. Lors des phases transitoires de fonctionnement, des fluctuations de pression de l'écoulement provoquent des instabilités, de sorte que la vitesse de rotation de la roue de la turbine n'est pas stabilisée et l'alternateur ne peut pas être couplé au réseau électrique. En particulier, lors du démarrage de la turbine, le distributeur s'ouvre petit à petit, entrainant des oscillations de la vitesse de rotation de la roue de la turbine. Puis, lorsque l'ouverture souhaitée du distributeur est atteinte, l'alternateur est couplé au réseau électrique dès que la vitesse de rotation de la roue est stable et atteint une vitesse de synchronisme.

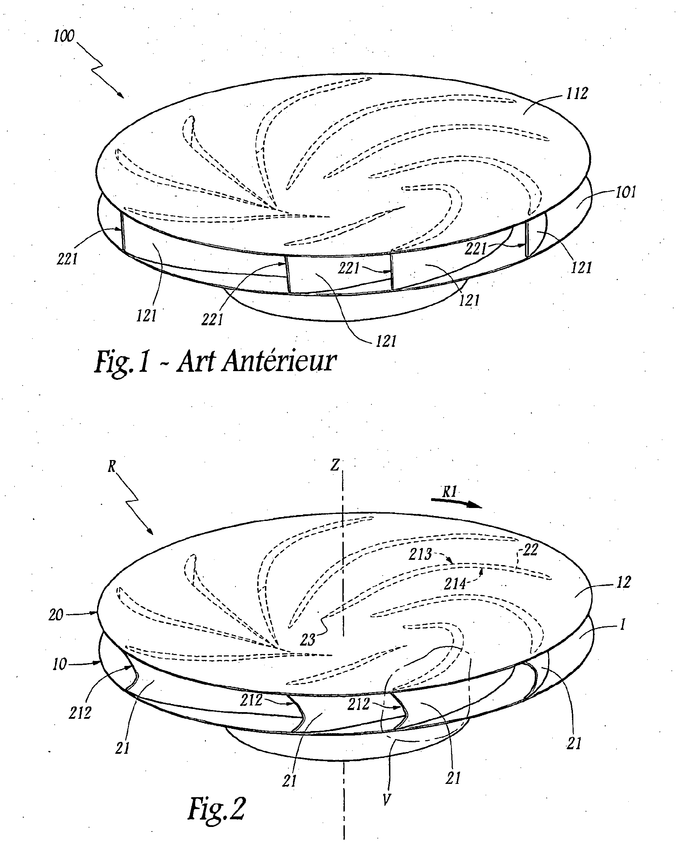

La figure 1 montre une roue 100 de type Francis de l'art antérieur, qui comporte une couronne 101 et un plafond 112 situé en regard de la couronne 101. La roue 100 comporte, en outre, neuf aubes 121 solidaires de la couronne 101 et du plafond 112 et qui s'étendent entre la couronne 101 et le plafond 112. Chaque aube 121 présente un bord d'attaque 221 rectiligne qui est traversé en premier par un écoulement forcé d'eau, lorsque la roue appartient à une machine hydraulique qui fonctionne en mode turbine.

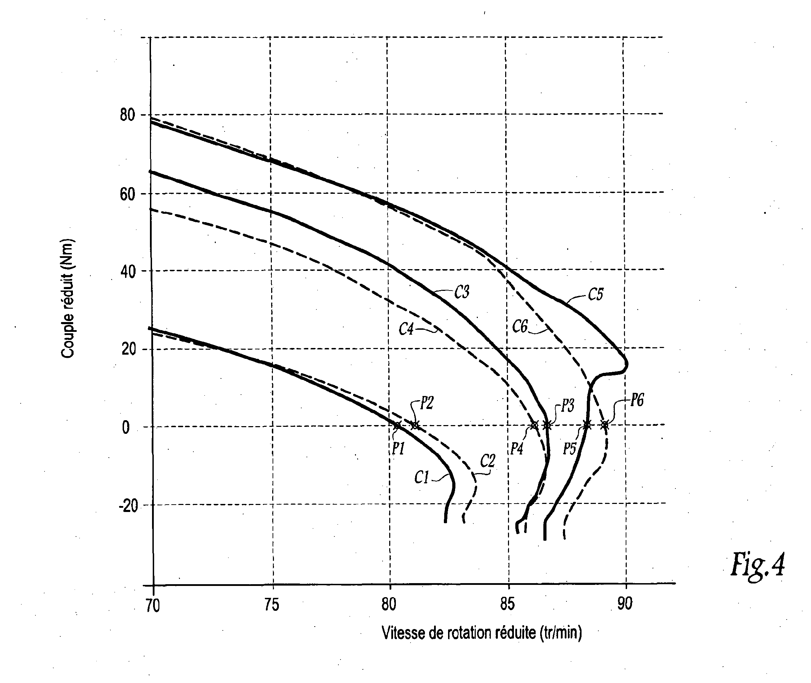

Le graphique de la figure 4 montre, en abscisses, une grandeur appelée « vitesse de rotation réduite », exprimée en tr/min, proportionnelle au rapport de la vitesse de rotation de la roue d'une turbine sur la racine carrée de la hauteur de chute, et, en ordonnées, une grandeur appelée « couple réduit », exprimée en Nm et proportionnelle au rapport du couple exercé par la roue, sur la hauteur de chute. Chaque courbe C1 à C6 du graphique donne le couple réduit de la roue en fonction de sa vitesse de rotation réduite, pour une ouverture constante d'un distributeur disposé en amont de cette roue. Les courbes en traits pleins C1, C3 et C5 correspondent au fonctionnement d'une turbine équipée de la roue 100 de l'art antérieur, et les courbes en pointillés C2, C4 et C6 correspondent au fonctionnement d'une turbine équipée d'une roue conforme à l'invention.

Les petites vitesses de rotation réduites de la turbine, sur la partie gauche du graphique, correspondent à des grandes hauteurs de chute, tandis que les grandes vitesses de rotation réduites de la turbine, sur la partie droite du graphique, correspondent à des hauteurs de chute faibles. Les points P1 à P6 sont situés respectivement à l'intersection entre les courbes C1 à C6 et une droite horizontale correspondant à un couple réduit nul. Les points P1 à P6 donnent donc une vitesse de rotation réduite de la roue permettant de coupler l'alternateur au réseau électrique. Il est connu que, dans un tel graphique, les points de fonctionnement pour lesquels la pente de la courbe est négative correspondent à un fonctionnement stable de la turbine, autrement dit à une vitesse de rotation de la roue stable. A l'inverse, les points de fonctionnement pour lesquels la pente de la courbe est positive correspondent à une vitesse de rotation de la roue instable, ce qui ne permet pas de coupler l'alternateur au réseau. De manière classique, on cherche à pouvoir faire fonctionner la turbine pour des hauteurs de chute les plus faibles possible, tout en conservant une pente négative.

Pour la roue 100 de l'art antérieur, on observe que pour le point P1, qui correspond à une première ouverture du distributeur pour une hauteur de chute relativement importante, la pente de la courbe C1 est négative et la vitesse de rotation est stable. Concernant le point P3, qui correspond à une hauteur de chute plus faible pour une seconde ouverture du distributeur, la courbe C3 est à peu près verticale ce qui signifie que la vitesse de rotation de la roue 100 de l'art antérieur est peu stable. Enfin, la courbe C5 est en forme de S et sa pente au point P5 est positive, ce qui correspond à une vitesse de rotation instable de la roue 100.

En conclusion, la roue 100 de l'art antérieur ne permet pas, à elle seule, de stabiliser sa vitesse de rotation pour des hauteurs de chute relativement faibles.

Dans le but de stabiliser la vitesse de rotation d'une roue de l'art antérieur, il est connu d'utiliser une turbine avec un dispositif supplémentaire de couplage qui consiste à désynchroniser des directrices. Ces directrices sont réparties autour de la roue et sont désynchronisables, c'est-à-dire qu'il est possible de les orienter différemment les unes par rapport aux autres pour faire varier autour de la roue le débit de l'écoulement en vue d'obtenir une courbe de pente négative dans la représentation de la figure 4. Cependant, désynchroniser les directrices nécessite, d'une part, la mise en place de servomoteurs de manoeuvre des directrices à désynchroniser et, d'autre part, la mise en place d'un programme de contrôle et de commande approprié.

US-2005/013691 divulgue une roue de type Francis comportant un plafond et une ceinture, entre lesquels s'étendent des aubes ayant un bord d'attaque incurvé dont la convexité est circonférentielle. Ainsi, les bords d'attaque comportent chacun un point intermédiaire, situé au fond de la forme courbe du bord d'attaque. Cette roue a une géométrie telle que le rayon d'un premier point de raccordement entre le bord d'attaque et le plafond est inférieur au rayon du point intermédiaire. Cette géométrie ne permet pas d'améliorer la stabilité de la vitesse de rotation de la roue, lors des phases de couplage sur le réseau électrique.

C'est à ces inconvénients qu'entend plus particulièrement remédier l'invention en proposant une roue de turbine dont la géométrie spécifique permet de stabiliser la vitesse de rotation de la roue lors des phases transitoires de démarrage, pour des hauteurs de chute relativement faibles.

A cet effet, l'invention a pour objet une roue de type Francis pour machine hydraulique, destinée à être traversée par un écoulement forcé d'eau, comportant :
- une couronne à symétrie de révolution autour d'un axe de rotation de la roue,
- un plafond à symétrie de révolution autour de l'axe de rotation et situé en regard de la couronne,
- une pluralité d'aubes incurvées, solidaires de la couronne et du plafond et présentant chacune un bord central à proximité de l'axe de rotation et un bord périphérique, opposé au bord central, qui s'étend entre la couronne et le plafond et qui est destiné à être traversé en premier par l'écoulement lorsque la machine hydraulique fonctionne en mode turbine. Autrement dit, lorsque la machine hydraulique fonctionne en mode turbine, l'écoulement s'écoule du bord périphérique vers le bord central.

Le bord périphérique d'au moins une aube est courbe avec sa concavité tournée vers l'extérieur de la roue. Une première distance, mesurée entre un point quelconque du bord périphérique et une droite passant par, d'une part, un premier point de raccordement entre le bord périphérique et la couronne et, d'autre part, un deuxième point de raccordement entre le bord périphérique et le plafond est maximale au niveau d'un point intermédiaire du bord périphérique. Le rayon du point intermédiaire est strictement inférieur au rayon du premier point de raccordement. Le rayon du point intermédiaire est strictement inférieur au rayon du deuxième point de raccordement.

Grâce à la forme en creux du bord périphérique des aubes, qui correspond au bord d'attaque lorsque la machine hydraulique fonctionne en mode turbine, on fait fonctionner la turbine pour des hauteurs de chute plus faibles, tout en conservant une pente négative aux points de fonctionnement permettant de coupler l'alternateur au réseau électrique. Ceci permet d'obtenir une vitesse de rotation stable et de coupler rapidement la turbine au réseau électrique sans avoir besoin d'ajouter un dispositif supplémentaire de couplage, en particulier, pour des hauteurs de chute faibles.

Selon des aspects avantageux mais non obligatoires de l'invention, une telle roue peut incorporer une ou plusieurs des caractéristiques suivantes, prises dans toute combinaison techniquement admissible :
- Le point intermédiaire est le plus éloigné de la droite.
- La projection orthogonale du point intermédiaire sur la droite est située dans une zone qui s'étend le long de la droite et qui est centrée sur le milieu de la droite. La hauteur de la zone est inférieure à 80% d'une hauteur de chaque aube, mesurée entre le premier point de raccordement et le deuxième point de raccordement, de préférence inférieure à 10%.
- Le bord périphérique des aubes est en forme de portion de cercle, d'ellipse, de parabole, voire de courbe quelconque.
- Un premier rapport ayant :
   - comme dénominateur, une hauteur d'une aube mesurée entre le premier point de raccordement et le deuxième point de raccordement,
   - comme numérateur, une distance maximale entre la droite et le bord périphérique,
est compris entre 0% et 200%, de préférence entre 30% et 80%.
- Le point intermédiaire du bord périphérique est situé à mi-distance entre les points de raccordement.
- Dans un premier plan, parallèle à l'axe de rotation et perpendiculaire à un second plan qui passe par une intersection entre le plafond et une surface moyenne de l'aube située entre une face externe et une face interne de l'aube, et qui prolonge cette surface moyenne, la face externe est convexe et la face interne est concave.
- Dans le premier plan, la face externe et la face interne sont en forme de portion de cercle, d'ellipse, de parabole, voire de courbe quelconque.
- Un second rapport, ayant :
   - comme dénominateur, une hauteur de l'aube, mesurée entre le premier point de raccordement et le deuxième point de raccordement,
   - comme numérateur, une distance maximale, mesurée parallèlement au premier plan, entre la droite et le bord périphérique,
est compris entre 0% et 200%, de préférence compris entre 10% et 40%.
- Dans le premier plan, le point intermédiaire du bord périphérique est situé à mi-distance entre les points de raccordement.
- Dans le premier plan, le bord périphérique est courbe, avec sa concavité tournée dans le même sens que le sens de rotation en mode turbine de la roue.
- Une deuxième distance, mesurée parallèlement au premier plan, entre un point quelconque du bord périphérique et la droite, est maximale au point intermédiaire.

L'invention a également pour objet une machine hydraulique équipée d'une telle roue.

Avantageusement, lorsque la machine fonctionne en mode turbine, l'écoulement frappe en premier la face externe des aubes.

Enfin, l'invention concerne une installation de conversion d'énergie comprenant une telle machine hydraulique.

L'invention sera bien comprise et d'autres avantages de celle-ci ressortiront aussi à la lumière de la description qui va suivre d'une roue équipant une machine hydraulique qui appartient à une installation de conversion d'énergie, donnée seulement à titre d'exemple et faite en référence aux dessins annexés dans desquels
- la figure 1 est une vue en perspective d'une roue de machine hydraulique de l'art antérieur ;
- la figure 2 est une vue analogue à la figure 1 d'une roue de machine hydraulique conforme à l'invention ;
- la figure 3 est une coupe de principe d'une installation de conversion d'énergie équipée d'une machine hydraulique comprenant la roue de la figure 2 ;
- la figure 4 est un graphique qui montre six courbes, dont trois en traits pleins montrent la vitesse de rotation de la roue de la figure 1 en fonction de son couple, et trois en pointillés montrent la vitesse de rotation de la roue de la figure 2 en fonction de son couple ;
- la figure 5 est une vue partielle en perspective, sous un autre angle et à plus grande échelle, du détail V à la figure 2 ;
- la figure 6 est une vue d'une aube appartenant à la roue de la figure 2, selon la flèche F6 à la figure 5 ;
- la figure 7 est une vue, à plus grande échelle, de l'aube de la figure 6, selon la flèche F7 à la figure 5 ;

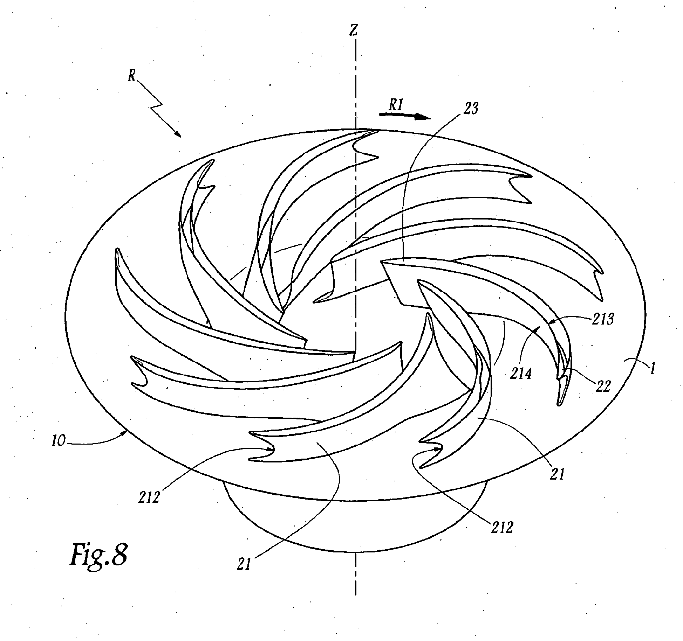

- la figure 8 est une vue en perspective de la roue de la figure 2 ;
- la figure 9 est une coupe, en vue de dessus, de la roue de la figure 2, selon le plan P8 à la figure 7, le plafond de la roue n'étant pas représenté ; et
- la figure 10 est une coupe, en vue de dessous, de la roue de la figure 2, selon le plan P8 à la figure 7, la ceinture de la roue n'étant pas représentée.

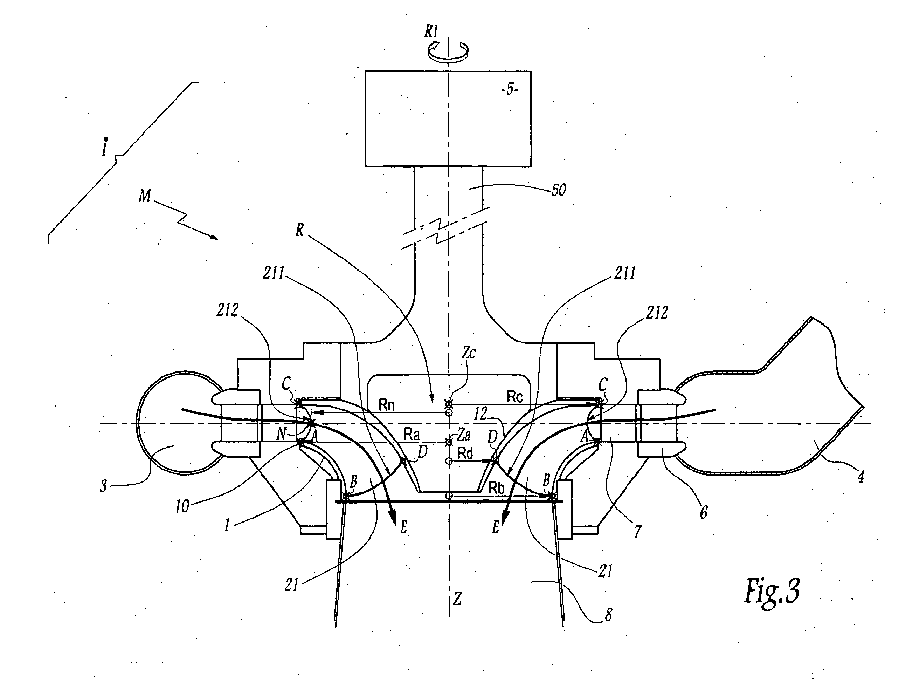

L'installation I représentée à la figure 3 comprend une machine hydraulique réversible M, qui est une turbine-pompe de type Francis, dont la roue R est alimentée en eau à partir d'une bâche 3 dans laquelle débouche une conduite forcée 4 lorsque la machine M fonctionne en mode turbine. En service, la roue 200 tourne autour d'un axe de rotation Z vertical. Lorsque la machine M fonctionne en mode turbine, la roue 200 tourne dans un sens de rotation R1, autour de l'axe Z, qui correspond au sens horaire lorsque la roue R est vue de dessus. Pour produire de l'électricité en mode turbine, la machine M est couplée à un alternateur 5 par un arbre 50 tournant autour de l'axe Z. Entre la bâche 3 et la roue R sont disposées des avant-directrices 6 statiques et des directrices 7 orientables, dont la fonction est de guider un écoulement d'eau E, provenant de la conduite 4 et destiné à traverser la roue R, en direction d'un conduit d'évacuation 8. Les directrices 7 assurent également la fonction d'un distributeur car elles permettent de réguler le débit de l'écoulement E.

La figure 2 illustre la roue R conforme à l'invention, qui comporte une couronne 1 et un plafond 12 situé en regard de la couronne 1. La couronne 1 et le plafond 12 sont à symétrie de révolution autour de l'axe Z. La couronne 1 et le plafond 12 présentent respectivement un bord périphérique externe 10 et 20 centré sur l'axe Z. Les surfaces de la couronne 1 et du plafond 12 présentent des formes gauches, engendrées par la rotation, autour et à distance de l'axe Z, d'un segment de courbe.

La roue R comporte, en outre, neuf aubes 21 solidaires de la couronne 1 et du plafond 12 et qui s'étendent entre la couronne 1 et le plafond 12 autour de l'axe Z. A la figure 2, les zones de raccordement entre les aubes 21, d'une part, et le plafond 2, d'autre part, sont représentées en pointillés.

Un objet est ici qualifié de « central » lorsqu'il se trouve au voisinage de l'axe Z, par opposition à l'adjectif « périphérique » qui désigne un objet qui est éloigné de l'axe Z.

Chaque aube 21 présente une forme incurvée entre une extrémité périphérique 22 de l'aube 21 et une extrémité centrale 23 de l'aube 21. Cette forme incurvée constitue une courbure principale de l'aube 21 globalement en forme de portion de spirale. Chaque aube 21 présente un bord périphérique 212, situé en périphérie de la couronne 1 et un bord central 211, tourné vers l'axe Z. Chaque aube 21 est délimitée par une face externe 213, à l'extérieur de la courbure principale de l'aube 21, et par une face interne 214, à l'intérieur de la courbure principale de l'aube 21. Les faces 213 et 214 se rejoignent au niveau du bord central 211 et du bord périphérique 212.

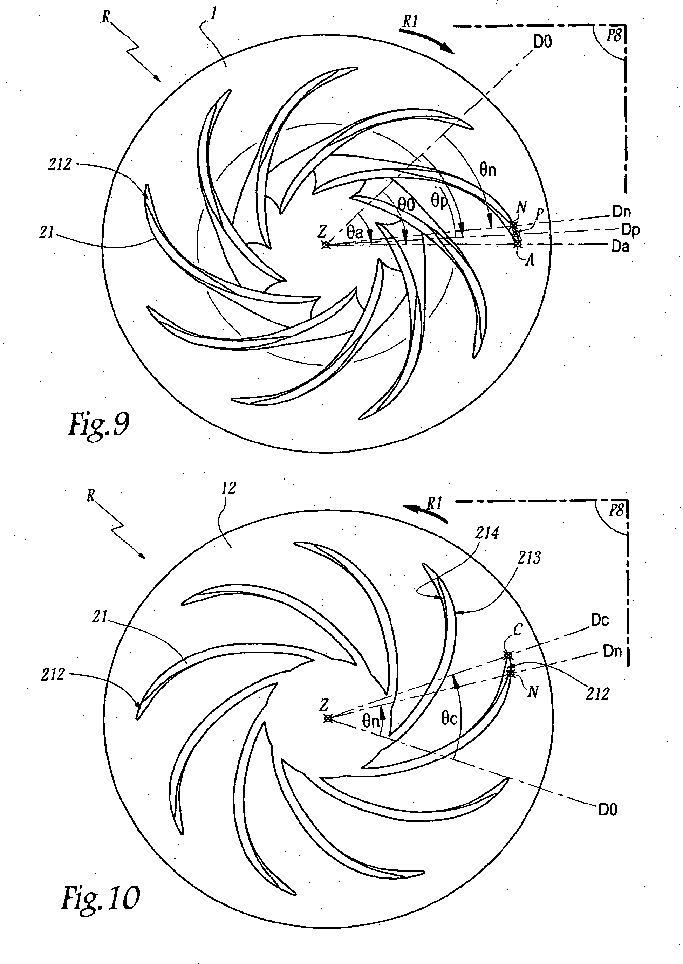

Lorsque la machine M fonctionne en mode turbine, l'écoulement E frappe en premier la face externe 213 des aubes 21. Comme visible aux figures 9 et 10, dans un plan de coupe perpendiculaire à l'axe de rotation Z, la face externe 213 de chaque aube 21 est convexe et la face interne 214 est concave.

Lorsque la machine hydraulique M fonctionne en mode turbine, le bord périphérique 212 de chaque aube 21 forme un bord d'attaque et le bord central 211 forme un bord de fuite. Le bord d'attaque est destiné à être traversé en premier par l'écoulement E lorsque la machine hydraulique M fonctionne en mode turbine. Autrement dit, en mode turbine, le fluide s'écoule du bord périphérique vers le bord central. La description donnée ci-après pour le mode turbine reprend ces expressions « bord d'attaque » et « bord de fuite » ; elle peut être transposée au cas où la roue fonctionne en mode pompe en inversant ces expressions.

On note A le point de raccordement de la couronne 1 avec le bord d'attaque 212 de chaque aube 21. On note B le point de raccordement de la couronne 1 avec le bord de fuite 211 de chaque aube 21. De façon analogue, on note C le point de raccordement du plafond 12 avec le bord d'attaque 212 de chaque aube 21 et on note D le point de raccordement du plafond 12 avec le bord de fuite 211 de chaque aube 21.

On note respectivement Ra, Rb, Rc ou Rd le rayon du point A, B, C ou D. Chaque rayon Ra, Rb, Rc et Rd est la distance, mesurée radialement, entre l'axe Z et le point A, B, C ou D.

Le rayon Rd est inférieur au rayon Rb. Les rayons Ra et Rc sont égaux et sont strictement supérieurs aux rayons Rb et Rd. En particulier, le rayon Rc est strictement supérieur au rayon Rb, ce qui permet à la machine M de pouvoir fonctionner en mode pompe, avec des performances satisfaisantes. Lorsque la machine M fonctionne en mode turbine, la pression de l'écoulement E, au niveau du point C, est plus importante qu'au niveau de point B.

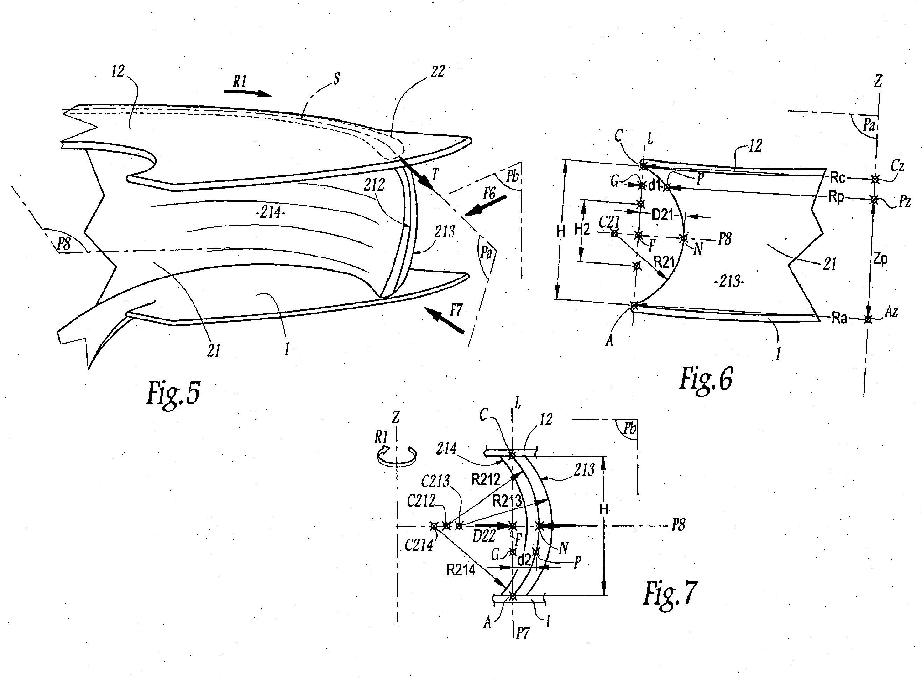

Les figures 5 à 7 montrent plus en détail l'extrémité périphérique 22 d'une des aubes 21, étant entendu que les autres aubes 21 sont similaires.

On note S une surface moyenne de chaque aube 21 passant entre les faces externe 213 et interne 214 de l'aube 21, à égale distance de ces faces. Au niveau de l'extrémité périphérique 22 de l'aube 21, la surface moyenne S coïncide avec le bord d'attaque 212. La surface S est représentée à la figure 5, par sa trace au niveau du plafond 12.

On note L, une droite passant par les points A et C du bord d'attaque 212. La droite L est parallèle à l'axe de rotation Z de la roue R. On note Pa, un plan qui passe par la droite L et qui est situé dans le prolongement de la surface moyenne S au niveau de son intersection avec le plafond 12. Le plan Pa passe par la demi-tangente à gauche T de l'extrémité périphérique S1 de la trace au niveau du plafond 12 de la surface moyenne S.

La figure 6 est une vue selon une flèche F6 perpendiculaire au plan Pa, et qui fait face à la face externe 213 de l'aube 21.

Le bord d'attaque 212 est courbe et ne présente pas de discontinuité. En d'autres termes, le bord d'attaque 212 est creusé en direction du bord de fuite 211, et sa forme ne présente pas de cassures. Ainsi, la concavité du bord d'attaque 212 est tournée vers l'extérieur de l'aube 21 et de la roue R, en particulier dans le plan Pa ou dans un plan parallèle aux faces 213 ou 214, au voisinage du bord d'attaque 212.

Dans le plan Pa, la forme courbe, en creux, du bord d'attaque 212 est définie par une portion de cercle, comme cela ressort de la figure 6. On note C21 le centre du bord d'attaque 212 dans le plan Pa et R21. son rayon.

Le bord d'attaque 212 est symétrique par rapport à un plan P8 perpendiculaire à la droite L qui passe par un point intermédiaire N du bord d'attaque 212. Le point N est le point du bord d'attaque 212 le plus éloigné de la droite L.

On note D21, une distance entre le point N et la droite L et on note H, une hauteur du bord d'attaque 212, mesurée entre les points A et C, le long de la droite L. La distance D21 est la distance maximale entre le bord d'attaque 212 et la droite L.

Dans l'exemple représenté, la distance D21 est mesurée perpendiculairement à la droite L. Soit d1, la distance entre la droite L et un point quelconque P du bord d'attaque 212, mesurée perpendiculairement à la droite L. Soit G, la projection orthogonale du point P sur la droite L. La distance d1 est mesurée entre les points P et G. La distance d1 est la projection du vecteur *̅P̅G̅*̅ dans le plan Pb. La distance d1 est nulle au point A et augmente entre les points A et N. Au point N, la distance d1 est maximale et est égale à la distance D21. Entre les points N et C, la distance d1 diminue. Au point C, la distance d1 est nulle.

Ainsi, le long du bord d'attaque 212 et entre les points A et C, la distance d1, exprimée comme fonction d'une distance L1 entre le point A et le point G, comporte un seul maximum et ne comporte pas de point d'inflexion.

La dérivée de la distance d1 par rapport à la distance L1 est positive entre les points A et N, s'annule au point N et est négative entre les points N et C. La dérivée seconde de la distance d1 par rapport à la distance L1 est négative entre les points A et C.

Un rapport ayant, comme numérateur, la distance D21 et, comme dénominateur, la hauteur H, est compris entre 0% et 200%, de préférence compris entre 30% et 80%.

On note F, un point d'intersection entre la droite L et le plan P8. La distance entre le point A et le point F est égale à la distance entre le point F et le point C. Autrement dit, le plan P8 est situé à mi-distance entre les points A et C, le long de la droite L.

On note Rn, le rayon du point N, c'est-à-dire la distance, mesurée radialement, entre l'axe Z et le point N. La distance Rn est strictement inférieure à la distance Ra et à la distance Rc.

La figure 7 est une vue de l'extrémité externe 22 de l'aube 21 de la figure 5, selon une flèche F7, contenue dans le plan Pa, et perpendiculaire à la droite L. La figure 7 est donc une vue dans un plan Pb perpendiculaire au plan Pa.

Comme visible à la figure 7, le voile de l'aube 21 est courbé vers l'extérieur de la roue R. En d'autres termes, dans le plan Pb, la face externe 213 est convexe et la face interne 214 est concave. Cette courbure secondaire des aubes 21 est continue et ne présente pas de cassures.

Plus précisément, dans le plan Pb, la surface externe 213, la surface interne 214 et la surface moyenne S, qui coïncide avec le bord d'attaque 212, sont chacune définies par une portion de cercle. On note C212 le centre du cercle qui définit la forme du bord d'attaque 212 et R212 son rayon. De même, on note C213 et C214 le centre des cercles qui définissent la forme de la surface externe 213 et de la surface interne 214, et R213 et R214 leur rayon respectif.

Compte tenu de cette courbure secondaire, la droite qui passe par les points F et N, le long de laquelle est mesurée la distance D21, est inclinée par rapport au plan Pa de la figure 6.

On note D22, une distance mesurée parallèlement au plan Pb entre le point F et le point N. La distance D22 est la distance maximale, dans un plan parallèle au plan Pb, entre la droite L et le bord d'attaque 212. La distance D22 est la projection du vecteur *̅F̅N̅*̅ dans le plan Pb. De la même manière, la distance D21 est la projection du vecteur *̅F̅N̅*̅ dans le plan Pa.

Un second rapport ayant, comme numérateur, la distance D22 et, comme dénominateur, la hauteur H de l'aube 21, est compris entre 0% et 200%, de préférence compris entre 10% et 40%.

Par ailleurs, dans le plan Pb, la face externe 213 et la face interne 214 sont symétriques par rapport au plan P8. Autrement dit, dans le plan Pb, le point N du bord d'attaque 212 est situé à mi-hauteur entre les points de raccordement A et C.

Dans l'exemple représenté, la distance D22 est mesurée perpendiculairement à la droite L. Soit d2, la distance entre la droite L et un point P quelconque du bord d'attaque 212 et la droite L, mesurée parallèlement au plan Pb et perpendiculairement à la droite L. La distance d2 est la projection du vecteur *̅P̅G̅*̅ dans le plan Pb. La distance d2 est mesurée entre les points P et G, parallèlement au plan Pb.

La distance d2 est nulle au point A et augmente entre les points A et N. Au point N, la distance d2 est maximale et est égale à la distance D22. Entre les points N et C, la distance d2 diminue. Au point C, la distance d2 est nulle. Ainsi, le long du bord d'attaque 212 et entre les points A et C, la distance d2, exprimée comme fonction de la distance L1, comporte un seul maximum et ne comporte pas de point d'inflexion. La dérivée de la distance d2 par rapport à la distance L1 est positive entre les points A et N, s'annule au point N et est négative entre les points N et C. La dérivée seconde de la distance d2 par rapport à la distance L1 est négative entre les points A et C.

La concavité de la courbure secondaire des aubes 21 est tournée dans le sens de rotation R1 de la roue R, lorsque la machine M fonctionne en mode turbine. En d'autres termes, dans une section perpendiculaire à la trace de la surface moyenne S sur le plafond 12, et dans la vue de la figure 7, la face externe 213 des aubes 21 est convexe et est tournée à l'opposé du sens de rotation R1, et la face interne 214 est concave et est tournée dans le même sens que le sens de rotation R1.

On note Rp, θp et Zp les coordonnées cylindriques d'un point P quelconque de chaque bord d'attaque 212.

Rp est le rayon du point P. Soit Pz, la projection orthogonale du point P sur l'axe Z. Le rayon Rp est mesuré entre les points Pz et P, selon une direction radiale. Au point A, le rayon Rp est égal au rayon Ra. Le rayon Rp diminue entre les points A et N. Au point N, le rayon Rp est minimal et est égal au rayon Rn. Le rayon Rp augmente entre les points N et C. Au point C, le rayon Rp est égal au rayon Rc.

Zp est la hauteur du point P. On note Az, la projection orthogonale du point A sur l'axe Z. La hauteur Zp du point P est la distance entre le point Az et le point Zp.

On note Cz, la projection orthogonale du point C sur l'axe Z. Le long du bord d'attaque 212 et entre les points A et C, le rayon Rp, exprimé comme fonction de la hauteur Zp, comporte un seul minimum et ne comporte pas de point d'inflexion. La dérivée du rayon Rp par rapport à la hauteur Zp est positive entre les points A et N, s'annule au point N et est négative entre les points N et C. La dérivée seconde du rayon Rp par rapport à la distance Zp est positive entre les points A et C.

θp est l'angle du point P, en coordonnées cylindriques. L'angle θp a un sens positif identique au sens de rotation R1 de la roue R, lorsque la machine M fonctionne en mode turbine. Soit Da, une droite radiale passant par le point A et l'axe Z. Pour chaque aube 21, on considère une droite radiale D0, passant par l'axe Z, telle qu'un angle θ0 positif, mesuré à partir de la droite D0 et jusqu'à la droite Da, est égal à 45°.

Dans le système de coordonnées cylindriques, l'angle θp du point P est défini à partir de la droite D0 et jusqu'à une droite Dp passant par les points Pz et P.

Comme visible à la figure 9, l'angle θp est maximal au point A et est égal à un angle θa. L'angle θp diminue entre les points A et N. Au point N, l'angle θp est minimal et est égal à un angle θn. Comme visible à la figure 10, entre les points N et C, l'angle θp augmente. Au point C, l'angle θp est maximal et est égal à un angle θc.

Ainsi, le long du bord d'attaque 212 et entre les points A et C, l'angle θp, exprimé comme fonction de la hauteur Zp, comporte un seul minimum et ne comporte pas de point d'inflexion.

La dérivée de l'angle θp par rapport à la hauteur Zp est négative entre les points A et N, s'annule au point N et est positive entre les points N et C. La dérivée seconde de l'angle θp par rapport à la hauteur Zp est positive entre les points A et C.

Lors des phases transitoires du fonctionnement de l'installation I, par exemple lors du démarrage de l'installation I, l'alternateur 5 n'est pas couplé au réseau électrique car la vitesse de rotation de la roue R n'est pas stable et ne permet pas à l'alternateur 5 de délivrer un signal électrique dont la fréquence est égale à la fréquence du réseau électrique. Par exemple, en Europe, la fréquence du réseau électrique est égale à 50 Hz. Grâce à la forme en creux du bord d'attaque 212 des aubes 21, l'écoulement E provoque peu, voire pas de turbulences et d'instabilités, ce qui permet à la vitesse de rotation de la roue R de se stabiliser en vue du couplage de l'alternateur 5 sur le réseau.

La stabilité de la vitesse de rotation de la roue R de l'invention peut être observée sur le graphique de la figure 4. Pour une hauteur de chute relativement importante, la pente de la courbe C1 au point P1 est négative, tout comme celle de la courbe C2 au point P2, ce qui signifie que pour la même hauteur de chute, le fonctionnement est stable à la fois pour la roue 100 de l'art antérieur et pour la roue R de l'invention. Au niveau du point P4, la pente de la courbe C4 est négative, tandis que la courbe C3, au point P3, est verticale, ce qui signifie que la vitesse de rotation de la roue de l'invention est plus stable que celle de l'art antérieur. Enfin, la courbe C6 a une pente légèrement négative au point P6, tandis que la pente de la courbe C5, au point P5, est positive, ce qui signifie que la vitesse de rotation de la roue R de l'invention est plus stable que celle de la roue 100 de l'art antérieur, pour une hauteur de chute relativement faible.

La forme bombée vers l'extérieur du voile des aubes 21 permet d'accentuer la concavité des bords d'attaque 212 et d'obtenir une distance D21 relativement importante, sans avoir besoin de creuser le bord d'attaque 212 de manière trop prononcée, le long de la surface moyenne S, en direction du bord de fuite 211. Ceci permet à la machine hydraulique M, lorsqu'elle fonctionne en mode pompe, de ne pas trop perdre en efficacité.

Aucun dispositif supplémentaire n'est nécessaire pour assurer une vitesse de rotation satisfaisante, la forme des aubes 21 permettant à elle seule le couplage de l'alternateur 5 sur le réseau.

En variante, la droite L n'est pas parallèle à l'axe de rotation Z de la roue R. Par exemple, le point C peut être décalé vers le bord de fuite 211 par rapport au point A.

En variante, la forme concave des bords d'attaque 212 est définie par une portion d'ellipse ou de parabole, voire par une courbe quelconque.

Dans une autre variante, la forme courbée vers l'extérieur du bord d'attaque 212, de la face externe 213 et de la face interne 214 d'une aube 21 est définie par une portion d'ellipse ou de parabole, voire par une courbe quelconque.

En variante, seules certaines aubes 21 ont leur bord d'attaque concave.

En variante, le point N n'est pas exactement à mi-hauteur entre les points A et C. La projection orthogonale du point intermédiaire N sur la droite L est alors située dans une zone qui s'étend, le long de la droite L, à partir du milieu F de la droite L et de part et d'autre du milieu F en étant centrée sur le milieu. La hauteur H2 de la zone est inférieure à 80% de la hauteur H de l'aube 21, de préférence inférieure à 10%.

En outre, les différentes variantes et modes de réalisation décrits ci-dessus peuvent être combinés entre eux, totalement ou partiellement, pour donner lieu à d'autres mises en oeuvre de l'invention.

## Revendications

1. Roue (R) de type Francis pour machine hydraulique (M), destinée à être traversée par un écoulement forcé d'eau (E), comportant :
- une couronne (1) à symétrie de révolution autour d'un axe de rotation (Z) de la roue (R),
- un plafond (12) à symétrie de révolution autour de l'axe de rotation (Z) et situé en regard de la couronne (1),
- une pluralité d'aubes (21) incurvées, solidaires de la couronne (1) et du plafond (12) et présentant chacune un bord central (211) à proximité de l'axe de rotation (Z) et un bord périphérique (212), opposé au bord central (211), qui s'étend entre la couronne (1) et le plafond (12) et qui est destiné à être traversé en premier par l'écoulement (E) lorsque la machine hydraulique (M) fonctionne en mode turbine,
le bord périphérique (212) d'au moins une aube (21) étant courbe, avec sa concavité tournée vers l'extérieur de la roue (R), une première distance (d1), mesurée entre un point (P) quelconque du bord périphérique (212) et une droite (L) passant par, d'une part, un premier point de raccordement (A) entre le bord périphérique (212) et la couronne (1) et, d'autre part, un deuxième point de raccordement (C) entre le bord périphérique (212) et le plafond (12) étant maximale au niveau d'un point intermédiaire (N) du bord périphérique (212), le rayon (Rn) du point intermédiaire (N) étant strictement inférieur au rayon (Ra) du premier point de raccordement (A),
la roue (R) étant **caractérisée en ce que** le rayon (Rn) du point intermédiaire (N) est strictement inférieur au rayon (Rc) du deuxième point de raccordement (C).

2. Roue (200) selon la revendication 1, **caractérisé en ce que** le point intermédiaire (N) est le plus éloigné de la droite (L).

3. Roue (200) selon l'une des revendications précédentes, **caractérisé en ce que** la projection orthogonale du point intermédiaire (N) sur la droite (L) est située dans une zone qui s'étend le long de la droite (L) et qui est centrée sur le milieu (F) de la droite (L) et en que la hauteur (H2) de la zone est inférieure à 80% d'une hauteur (H) de chaque aube (21), mesurée entre le premier point de raccordement (A) et le deuxième point de raccordement (C), de préférence inférieure à 10%.

4. Roue (R) selon l'une des revendications précédentes, **caractérisée en ce que** le bord périphérique (212) des aubes (21) est en forme de portion de cercle, d'ellipse, de parabole, voire de courbe quelconque.

5. Roue (R) selon l'une des revendications précédentes, **caractérisée en ce qu'**un premier rapport ayant :
comme dénominateur, une hauteur (H) d'une aube (21), mesurée entre le premier point de raccordement (A) et le deuxième point de raccordement (C),
- comme numérateur, une distance maximale (D21) entre la droite (L) et le bord périphérique (212),
est compris entre 0% et 200%, de préférence entre 30% et 80%.

6. Roue (R) selon l'une des revendications précédentes, **caractérisée en ce que** le point intermédiaire (N) du bord périphérique (212) est situé à mi-distance entre les points de raccordement (A, C).

7. Roue (R) selon l'une des revendications précédentes, **caractérisée en ce que**, dans un premier plan (Pb), parallèle à l'axe de rotation et perpendiculaire à un second plan (Pa) qui passe par une intersection entre le plafond (12) et une surface moyenne (S) de l'aube (21) située entre une face externe (213) et une face interne (214) de l'aube (21), et qui prolonge cette surface moyenne, la face externe (213) est convexe et la face interne (214) est concave.

8. Roue (R) selon la revendication 7, **caractérisée en ce que**, dans le premier plan (Pb), la forme de la face externe (213) et de la face interne (214) est définie par une portion de cercle, d'ellipse, de parabole, voire une courbe quelconque.

9. Roue selon l'une des revendications 7 et 8, **caractérisée en ce qu'**un second rapport, ayant :
- comme dénominateur, une hauteur (H) de l'aube (21), mesurée entre le premier point de raccordement (A) et le deuxième point de raccordement (C),
- comme numérateur, une distance (D22) maximale, mesurée parallèlement au premier plan (Pb), entre la droite (L) et le bord périphérique (212),
est compris entre 0% et 200%, de préférence compris entre 10% et 40%.

10. Roue (R) selon l'une des revendications 7 à 9, **caractérisée en ce que**, dans le premier plan (Pb), le point intermédiaire (N) du bord périphérique (212) est situé à mi-distance entre les points de raccordement (A, C).

11. Roue (R) selon l'une des revendications 7 à 10, **caractérisée en ce que**, dans le premier plan (Pb), le bord périphérique (212) est courbe, avec sa concavité tournée dans le même sens que le sens de rotation (R1) en mode turbine de la roue (200).

12. Roue (R) selon l'une des revendications 7 à 11, **caractérisée en ce qu'**une deuxième distance (d2), mesurée parallèlement au premier plan (Pb), entre un point un point (P) quelconque du bord périphérique (212) et la droite (L), est maximale au point intermédiaire (N).

13. Machine hydraulique (M), **caractérisée en ce qu'**elle est équipée d'une roue (R) selon l'une des revendications précédentes.

14. Machine hydraulique (M) selon la revendication 13, équipée d'une roue (R) selon la revendication 7, **caractérisée en ce que** lorsqu'elle fonctionne en mode turbine, l'écoulement (E) frappe en premier la face externe (213) des aubes (21).

15. Installation (I) de conversion d'énergie, **caractérisée en ce qu'**elle comprend au moins une machine hydraulique (M) selon l'une des revendications 13 et 14.

## Patentansprüche

1. Laufrad (R) vom Typ eines Francis-Laufrads für eine hydraulische Maschine (M), welches dazu bestimmt ist, von einer erzwungenen Wasserströmung (E) durchquert zu werden, und aufweist:
- einen Kranz (1), der um eine Drehachse (Z) des Laufrads (R) rotationssymmetrisch ist,
- eine Decke (12), die um die Drehachse (Z) rotationssymmetrisch ist und gegenüber dem Kranz (1) angeordnet ist,
- mehrere gekrümmte Schaufeln (21), die mit dem Kranz (1) und mit der Decke (12) fest verbunden sind und jeweils einen zentralen Rand (211) in der Nähe der Drehachse (Z) und einen dem zentralen Rand (211) gegenüberliegenden Umfangsrand (212), welcher sich zwischen dem Kranz (1) und der Decke (12) erstreckt und welcher dazu bestimmt ist, von der Strömung (E) zuerst durchquert zu werden, wenn die hydraulische Maschine (M) in der Turbinen-Betriebsart arbeitet, aufweisen,
wobei der Umfangsrand (212) mindestens einer Schaufel (21) gekrümmt ist, wobei seine Konkavität der Außenseite des Laufrads (R) zugewandt ist, wobei ein erster Abstand (d1), der zwischen einem beliebigen Punkt (P) des Umfangsrandes (212) und einer Geraden (L) gemessen wird, die durch einerseits einen ersten Anschlusspunkt (A) zwischen dem Umfangsrand (212) und dem Kranz (1) und andererseits einen zweiten Anschlusspunkt (C) zwischen dem Umfangsrand (212) und der Decke (12) verläuft, an einem Zwischenpunkt (N) des Umfangsrandes (212) maximal ist, wobei der Radius (Rn) des Zwischenpunktes (N) streng kleiner als der Radius (Ra) des ersten Anschlusspunktes (A) ist,
wobei das Laufrad (R) **dadurch gekennzeichnet ist, dass** der Radius (Rn) des Zwischenpunktes (N) streng kleiner als der Radius (Rc) des zweiten Anschlusspunktes (C) ist.

2. Laufrad (200) nach Anspruch 1, **dadurch gekennzeichnet, dass** der Zwischenpunkt (N) der von der Geraden (L) am weitesten entfernte Punkt ist.

3. Laufrad (200) nach einem der vorhergehenden Ansprüche, **dadurch gekennzeichnet, dass** sich die orthogonale Projektion des Zwischenpunktes (N) auf die Gerade (L) in einem Bereich befindet, welcher sich entlang der Geraden (L) erstreckt und welcher um den Mittelpunkt (F) der Geraden (L) zentriert ist, und dadurch, dass die Höhe (H2) des Bereiches kleiner als 80 % einer zwischen dem ersten Anschlusspunkt (A) und dem zweiten Anschlusspunkt (C) gemessenen Höhe (H) jeder Schaufel (21) ist, vorzugsweise kleiner als 10 %.

4. Laufrad (R) nach einem der vorhergehenden Ansprüche, **dadurch gekennzeichnet, dass** der Umfangsrand (212) der Schaufeln (21) die Form eines Abschnitts eines Kreises, einer Ellipse, einer Parabel oder sogar einer beliebigen Kurve aufweist.

5. Laufrad (R) nach einem der vorhergehenden Ansprüche, **dadurch gekennzeichnet, dass** ein erstes Verhältnis, welches aufweist:
- als Nenner eine zwischen dem ersten Anschlusspunkt (A) und dem zweiten Anschlusspunkt (C) gemessene Höhe (H) einer Schaufel (21),
- als Zähler einen maximalen Abstand (D21) zwischen der Geraden (L) und dem Umfangsrand (212),
zwischen 0 % und 200 %, vorzugsweise zwischen 30 % und 80 % liegt.

6. Laufrad (R) nach einem der vorhergehenden Ansprüche, **dadurch gekennzeichnet, dass** sich der Zwischenpunkt (N) des Umfangsrandes (212) in der Mitte zwischen den Anschlusspunkten (A, C) befindet.

7. Laufrad (R) nach einem der vorhergehenden Ansprüche, **dadurch gekennzeichnet, dass** in einer ersten Ebene (Pb), die parallel zur Drehachse ist und senkrecht zu einer zweiten Ebene (Pa) ist, welche durch eine Schnittlinie zwischen der Decke (12) und einer mittleren Fläche (S) der Schaufel (21), die sich zwischen einer Außenseite (213) und einer Innenseite (214) der Schaufel (21) befindet, verläuft, und welche diese mittlere Fläche verlängert, die Außenseite (213) konvex ist und die Innenseite (214) konkav ist.

8. Laufrad (R) nach Anspruch 7, **dadurch gekennzeichnet, dass** in der ersten Ebene (Pb) die Form der Außenseite (213) und der Innenseite (214) durch einen Abschnitt eines Kreises, einer Ellipse, einer Parabel oder sogar einer beliebigen Kurve definiert ist.

9. Laufrad nach einem der Ansprüche 7 und 8, **dadurch gekennzeichnet, dass** ein zweites Verhältnis, welches aufweist:
- als Nenner eine zwischen dem ersten Anschlusspunkt (A) und dem zweiten Anschlusspunkt (C) gemessene Höhe (H) der Schaufel (21),
- als Zähler einen parallel zu der ersten Ebene (Pb) gemessenen maximalen Abstand (D22) zwischen der Geraden (L) und dem Umfangsrand (212),
zwischen 0 % und 200 %, vorzugsweise zwischen 10 % und 40 % liegt.

10. Laufrad (R) nach einem der Ansprüche 7 bis 9, **dadurch gekennzeichnet, dass** sich in der ersten Ebene (Pb) der Zwischenpunkt (N) des Umfangsrandes (212) in der Mitte zwischen den Anschlusspunkten (A, C) befindet.

11. Laufrad (R) nach einem der Ansprüche 7 bis 10, **dadurch gekennzeichnet, dass** in der ersten Ebene (Pb) der Umfangsrand (212) gekrümmt ist, wobei seine Konkavität derselben Richtung zugewandt ist, wie die Drehrichtung (R1) in der Turbinen-Betriebsart des Laufrads (200).

12. Laufrad (R) nach einem der Ansprüche 7 bis 11, **dadurch gekennzeichnet, dass** ein parallel zu der ersten Ebene (Pb) gemessener zweiter Abstand (d2) zwischen einem beliebigen Punkt (P) des Umfangsrandes (212) und der Geraden (L) in dem Zwischenpunkt (N) maximal ist.

13. Hydraulische Maschine (M), **dadurch gekennzeichnet, dass** sie mit einem Laufrad (R) nach einem der vorhergehenden Ansprüche ausgestattet ist.

14. Hydraulische Maschine (M) nach Anspruch 13, die mit einem Laufrad (R) nach Anspruch 7 ausgestattet ist, **dadurch gekennzeichnet, dass**, wenn sie in der Turbinen-Betriebsart arbeitet, die Strömung (E) zuerst auf die Außenseite (213) der Schaufeln (21) trifft.

15. Energieumwandlungsanlage (I), **dadurch gekennzeichnet, dass** sie mindestens eine hydraulische Maschine (M) nach einem der Ansprüche 13 und 14 aufweist.

## Claims

1. Francis-type runner (R) for a hydraulic machine (M), intended to be traversed by a forced flow (E) of water, comprising:
- a wheel (1) which is rotationally symmetrical about an axis of rotation (Z) of the runner (R),
- a crown (12) which is rotationally symmetrical about the axis of rotation (Z) and located facing the wheel (1),
- a plurality of inwardly curved blades (21) secured to the wheel (1) and to the crown (12) and each having a central edge (211) in the vicinity of the axis of rotation (Z) and a peripheral edge (212), opposite the central edge (211), which extends between the wheel (1) and the crown (12) and which is intended to be traversed firstly by the flow (E) when the hydraulic machine (M) is operating in turbine mode,
the peripheral edge (212) of at least one blade (21) being curved, with the concavity thereof facing towards the outside of the runner (R), a first distance (d1), measured between any point (P) on the peripheral edge (212) and a straight line (L) passing through, on the one hand, a first connection point (A) between the peripheral edge (212) and the wheel (1) and, on the other hand, a second connection point (C) between the peripheral edge (212) and the crown (12), being at a maximum at an intermediate point (N) on the peripheral edge (212), the radius (Rn) of the intermediate point (N) being strictly less than the radius (Ra) of the first connection point (A),
the runner (R) being **characterized in that** the radius (Rn) of the intermediate point (N) is strictly less than the radius (Rc) of the second connection point (C).

2. Runner (200) according to Claim 1, **characterized in that** the intermediate point (N) is furthest away from the straight line (L).

3. Runner (200) according to either of the preceding claims, **characterized in that** the orthogonal projection of the intermediate point (N) on the straight line (L) is located in a zone which extends along the straight line (L) and which is centred on the middle (F) of the straight line (L), and **in that** the height (H2) of the zone is less than 80% of a height (H) of each blade (21), measured between the first connection point (A) and the second connection point (C), preferably less than 10%.

4. Runner (R) according to one of the preceding claims, **characterized in that** the peripheral edge (212) of the blades (21) is in the shape of a portion of a circle, an ellipse, a parabola, or any other curve.

5. Runner (R) according to one of the preceding claims, **characterized in that** a first ratio having:
- as denominator, a height (H) of a blade (21), measured between the first connection point (A) and the second connection point (C),
- an numerator, a maximum distance (D21) between the straight line (L) and the peripheral edge (212),
is between 0% and 200%, preferably between 30% and 80%.

6. Runner (R) according to one of the preceding claims, **characterized in that** the intermediate point (N) on the peripheral edge (212) is located midway between the connection points (A, C).

7. Runner (R) according to one of the preceding claims, **characterized in that**, in a first plane (Pb), parallel to the axis of rotation and perpendicular to a second plane (Pa) which passes through an intersection between the crown (12) and a mean surface (S) of the blade (21) located between an external face (213) and an internal face (214) of the blade (21), and which extends this mean surface, the external face (213) is convex and the internal face (214) is concave.

8. Runner (R) according to Claim 7, **characterized in that**, in the first plane (Pb), the shape of the external face (213) and of the internal face (214) is defined by a portion of a circle, an ellipse, a parabola, or any other curve.

9. Runner (R) according to either of Claims 7 and 8, **characterized in that** a second ratio, having:
- as denominator, a height (H) of the blade (21), measured between the first connection point (A) and the second connection point (C),
- as numerator, a maximum distance (D22), measured parallel to the first plane (Pb), between the straight line (L) and the peripheral edge (212),
is between 0% and 200%, preferably between 10% and 40%.

10. Runner (R) according to one of Claims 7 to 9, **characterized in that**, in the first plane (Pb), the intermediate point (N) on the peripheral edge (212) is located midway between the connection points (A, C).

11. Runner (R) according to one of Claims 7 to 10, **characterized in that**, in the first plane (Pb), the peripheral edge (212) is curved, with the concavity thereof facing in the same direction as the direction of rotation (R1) in the turbine mode of the runner (200).

12. Runner (R) according to one of Claims 7 to 11, **characterized in that** a second distance (d2), measured parallel to the first plane (Pb), between any point (P) on the peripheral edge (212) and the straight line (L), is at a maximum at the intermediate point (N).

13. Hydraulic machine (M), **characterized in that** it is equipped with a runner (R) according to one of the preceding claims.

14. Hydraulic machine (M) according to Claim 13, equipped with a runner (R) according to Claim 7, **characterized in that**, when it is operating in turbine mode, the flow (E) first strikes the external face (213) of the blades (21).

15. Energy conversion installation (I), **characterized in that** it comprises at least one hydraulic machine (M) according to either of Claims 13 and 14.
